# EUROPÄISCHE PATENTSCHRIFT

(11) **EP 2 225 543 B1**
(45) Veröffentlichungstag und Bekanntmachung des Hinweises auf die Patenterteilung: **15.08.2018**
(21) Anmeldenummer: 08863487.8
(22) Anmeldetag: 06.12.2008
(51) Int. Cl.: G01L 3/10

(54) **TRETLAGER MIT DREHMOMENTSENSORIK**
BOTTOM BRACKET BEARING WITH A TORQUE SENSOR UNIT
PÉDALIER À SYSTÈME DE DÉTECTION DE COUPLE DE ROTATION

(30) Priorität: 21.12.2007 DE 102007062156
(43) Veröffentlichungstag der Anmeldung: 08.09.2010
(73) Patentinhaber: Schaeffler Technologies AG & Co. KG, 91074 Herzogenaurach (DE)
(72) Erfinder: GLÜCK, Stefan, 97424 Schweinfurt (DE); PAUSCH, Michael, 97464 Oberwerrn (DE); BENKERT, Frank, 97534 Waigolshausen (DE)
(86) Internationale Anmeldenummer: PCT/DE2008/002051
(87) Internationale Veröffentlichungsnummer: WO 2009/079980

(56) Entgegenhaltungen:
- EP-A- 0 765 804
- EP-A- 1 978 343
- EP-A1- 2 156 156
- WO-A-01/44770
- WO-A-99/21150
- DE-A1- 3 820 433
- DE-A1- 3 924 910
- DE-A1- 19 609 981
- JP-A- 2000 335 476
- US-A- 5 493 937

## Beschreibung

Die Erfindung betrifft ein Tretlager nach dem Oberbegriff von Anspruch 1 mit einer Drehmomentsensorik, beispielsweise für ein Fahrrad, ein Ergometer oder ein Pedelec.

Aus dem Stand der Technik ist bekannt, bei einer von einer Tretkurbel angetriebenen Welle das für die Tretkurbel in die Welle eingeleitete Drehmoment zu erfassen. Sind das Drehmoment und die Winkelgeschwindigkeit der Welle bekannt, lässt sich die in die Welle eingeleitete Leistung als Produkt von Drehmoment und Winkelgeschwindigkeit einfach ermitteln. Von Interesse sind insbesondere solche Drehmomenterfassungsvorrichtungen, die die Erfassung des momentanen Drehmomentes ermöglichen. Wichtig sind weiter solche Anordnungen eines Tretlagers mit mindestens zwei Tretkurbeln, die an einer gemeinsamen Welle jeweils drehfest angeordnet sind, wobei die Möglichkeit besteht, das von jeder der beiden Tretkurbeln eingeleitete Drehmoment separat sowie das in der Welle resultierende Drehmoment zu erfassen.

Aus dem Stand der Technik ist insbesondere ein Tretlager bekannt mit einer Drehmomentsensorik, wobei das Tretlager mindestens eine Tretkurbel, eine Welle, die mit der mindestens einen Tretkurbel drehfest verbunden ist, und eine Drehmomenterfassungsvorrichtung zur Erfassung eines Drehmomentes im Bereich der Welle umfasst, wobei die Vorrichtung eine erste Magnetisierung und einen Sensor umfasst, der eine Änderung der ersten Magnetisierung aufgrund des in die Welle eingeleiteten Drehmomentes erfasst. Die Welle ist dabei als Vollwelle ausgebildet, die Änderung der ersten Magnetisierung wird mittels einer Spule erfasst, die neben der Vollwelle angeordnet ist. Die Erfassung des Drehmoments geschieht unter Ausnutzung des magnetostriktiven Effektes, dem zufolge das Auftreten von mechanischen Spannungen, wie sie bei dem Einleiten des Drehmomentes in die Welle auftreten, zu einer Änderung der Magnetisierung führen kann, insbesondere, wenn dem Material der Welle eine Magnetisierung aufgeprägt wurde. Aus der erfassten Änderung der ersten Magnetisierung lässt sich auf die internen Spannungen in der Vollwelle schliessen, die wiederum einen Rückschluss auf das in die Vollwelle eingeleitete Drehmoment erlauben. Der Stand der Technik beschreibt nur die Erfassung des in die Vollwelle eingeleiteten Magnetfeldes und unterscheidet bei einem Tretlager mit zwei Tretkurbeln nicht danach, welches Drehmoment die einzelnen Tretkurbeln in die Vollwelle einleiten.

DE 103 01 610 A1 beschreibt einen ersten Hohlkörper und einen zweiten Hohlkörper, die entlang einer zueinander komplementären Ausgestaltung der Stirnflächen in eine Mehrzahl von Segmenten aneinander gelagert werden können. Beide Hohlkörper sind durch einen Luftspalt getrennt. Beide Hohlkörper werden von einem Magnetfeld durchsetzt, das sich ändert, sobald die Hohlkörper relativ zueinander verdreht werden. Eine derartige Anordnung ist für die Anwendung als Welle in einem Tretlager kaum geeignet, da die räumliche Auflösung durch die Zahl der Segmente begrenzt ist und eine Änderung des Magnetfeldes durch eine Änderung des Abstandes der beiden Hohlkörper beeinflusst werden kann. Ungünstig ist weiter, dass das Magnetfeld leistungsstark auszulegen ist, so dass die Funktion anderer, insbesondere elektronischer Komponenten, gestört werden kann.

DE 196 09 981 A1 beschreibt ein Tretlager für ein Fahrrad mit einer Erfassungsvorrichtung für insbesondere das Drehmoment. Die Erfassungsvorrichtung umfasst eine torsionssteife Innenlagerwelle mit je einer form- und kraftschlüssigen Aufnahme für die beiden Tretkurbeln. Die torsionssteife Innenlagerwelle ist mit einer torsionselastischen Welle so verbunden, dass die Torsion in mindestens einer Drehrichtung auf die torsionselastische Welle übertragen wird. Die Verdrehung der torsionselastischen Welle wird mittels eines Hallsensors erfasst. Die Erfassungsvorrichtung ist störanfällig, weiter kommt die Temperatur- bzw. Feuchtigkeitsabhängigkeit der elastischen Eigenschaften der torsionselastischen Welle ungünstig zum Tragen. Nachteilig ist ferner, dass der Bediener eine erhebliche Kraft aufwenden muss, um die torsionselastische Welle zu verdrehen, so dass für den Antrieb des Fahrrades nur ein vermindertes Drehmoment zur Verfügung steht, und das Fahrrad insgesamt schwergängig ist.

EP 0 954 746 B1 beschreibt eine Vorrichtung und ein Verfahren zur Erfassung eines auf eine Tretlagerwelle ausgeübten Drehmomentes. Hierzu sind auf der Welle zwei axial beabstandete Signalgeber angeordnet, die jeweils ein erstes und ein zweites Rechtecksignal geben. Aus den Abständen der Flanken einander zugeordneter Rechtecksignale kann auf ein Drehmoment geschlossen werden, sofern über mindestens eine volle Umdrehung der Welle gemittelt wird. Nachteilig ist, dass nur ein gemitteltes und nicht das momentane Drehmoment erfassbar ist. Auch ist die Erfassung sehr kleiner Drehmomente schwierig, da die Fertigungstoleranzen der Signalgeber eine Rolle spielen.

US 6,644,135 B1 beschreibt ein Tretlager, in dessen Bereich Drucksensoren angeordnet werden, aus denen die auf das Tretlager wirkenden Kräfte ermittelt werden. Es lassen sich allenfalls indirekt Drehmomente erfassen.

Die EP 1978343 A2 beschreibt eine Hohlwelle mit einem Drehmomentsensor, der zwei magnetostriktive Bänder umfasst, die an einer äußeren Mantelfläche einer Hülse befestigt sind.

Die EP 2156156 A1 beschreibt eine Antriebseinrichtung mit einer Antriebswelle und einem magnetostriktiven Sensor.

Die US 5,493,937 offenbart eine Fahrrad-Kurbelwellenanordnung mit einer Tretlagerschale, zwei Kurbelarmen und einer zweiteiligen Hohlwelle.

Die WO 99/21150 A2 beschreibt eine magnetoelastische Drehmoment-Messeinrichtung zur Drehmomentmessung, unter anderem mit einem Hohlschaft mit umlaufender Magnetisierung, wobei Feldsensoren zum Einsatz kommen.

### Aufgabe der Erfindung

Es ist die Aufgabe der Erfindung, für das eingangs genannte Tretlager eine sichere und schnelle Erfassung von Drehmomenten, speziell der unterschiedlichen Drehmomente beider Tretkurbeln, anzugeben.

### Zusammenfassung der Erfindung

Diese Aufgabe wird für das genannte Tretlager erfindungsgemäss mit den Merkmalen des Anspruchs 1 gelöst.

Aufgrund der Ausbildung der Welle als Hohlwelle mit einem Hohlraum ist ein Aufnahmeraum für den Sensor der Drehmomenterfassungsvorrichtung geschaffen.

Die Anordnung der ersten Magnetisierung an der Hohlwelle bietet die Möglichkeit, die Änderung der Magnetisierung sowohl innerhalb als auch ausserhalb der Hohlwelle zu erfassen.

Weiter sind Hohlwellen leichtbauend, so dass im Bereich der Tretlager zunehmend Hohlwellen anstelle von Vollwellen vorgesehen werden.

Vorzugsweise ist vorgesehen, dass die Hohlwelle zweiteilig ausgebildet ist und eine erste Teilhohlwelle und eine zweite Teilhohlwelle umfasst, die drehfest miteinander verbunden sind. Die beiden Teilhohlwellen können unmittelbar aneinander gefügt sein, beispielsweise über eine zueinander komplementäre Stirnverzahnung entlang einer Fügefläche. Alternativ hierzu kann vorgesehen sein, zwischen die beiden Teilhohlwellen ein Zwischenstück einzusetzen, das beispielsweise eine kurze Vollwelle ist, und das die beiden Teilhohlwellen miteinander verbindet.

Vorzugsweise ist vorgesehen, dass der Sensor ein magnetisches Erfassungmittel, insbesondere eine Spule, eine Telemetrieeinheit und eine Auswerteelektronik umfasst, die als bauliche Einheit zusammengefasst sind. Die bauliche Einheit kann in der Hohlwelle weitgehend vollständig und sicher aufgenommen werden und ist platzsparend anzubringen. Ist speziell die Hohlwelle durch zwei Teilhohlwellen gebildet, kann die bauliche Einheit in einer der beiden Teilhohlwellen aufgenommen sein. Die bauliche Einheit kann im Hinblick auf die Hohlwelle bzw. die Teilhohlwelle äusserlich so gestaltet sein, dass diese im Wesentlichen formschlüssig in der Hohlwelle bzw. in der Teilhohlwelle aufgenommen ist.

Vorzugsweise ist vorgesehen, dass der Sensor eine Energieversorgungseinheit umfasst, und dass die Energieversorgungseinheit in die bauliche Einheit integriert ist. Damit lässt sich der Sensor als im Wesentlichen funktionsfähige Bauteilgruppe ggf. nachträglich montieren.

Alternativ zu einer Integration der Energieversorgungseinheit in den Sensor kann vorgesehen sein, dass die bauliche Einheit in der ersten Teilhohlwelle und eine Energieversorgungseinheit des Sensors in der zweiten Teilhohlwelle angeordnet sind. Damit verteilt sich das Gewicht des Sensors bzw. der Energieversorgungseinheit des Sensors auf beide Seiten der Hohlwelle. Zur Herstellung einer Verbindung zwischen der Energieversorgungseinheit und dem Sensor kann vorgesehen sein, dass das Verbindungsmittel, das die beiden Teilhohlwellen in axialer Richtung aneinander festlegt, elektrisch leitend ausgestaltet ist. Alternativ oder ergänzend hierzu kann vorgesehen sein, die Verbindung nach Art einer Steckverbindung zwischen der Energieversorgungseinheit und dem Sensor auszugestalten. Es versteht sich ferner, dass anstelle einer zweiteiligen Hohlwelle eine einzige, in axialer Erstreckung durchgehende Hohlwelle vorgesehen sein kann, an deren ersten Abschnitt der Sensor und an deren zweiten Abschnitt die Energieversorgungseinheit des Sensors angeordnet ist, wobei ein axialer Abstand zwischen dem Sensor und dessen Energieversorgungseinheit beispielsweise durch die Steckverbindung eingestellt wird.

Vorzugsweise ist vorgesehen, dass der Sensor in einer aussen an der Welle einschraubbaren Einheit angeordnet ist. Durch die Schraubverbindung lässt sich der Sensor einfach und schnell bezüglich der ersten Magnetisierung positionieren.

Vorzugsweise ist vorgesehen, dass die mindestens eine Tretkurbel mit einer Tretkurbelwelle drehfest verbunden ist, und dass die Tretkurbelwelle in der Hohlwelle, insbesondere in der ersten Teilhohlwelle, drehfest aufgenommen ist. Mit dieser Anordnung lässt sich das von der ersten Tretkurbel über die Tretkurbelwelle eingeleitete Drehmoment erfassen und eindeutig der ersten Tretkurbel zuordnen, so dass sich die Leistung des die erste Tretkurbel antreibenden Beins des Bedieners unabhängig erfassen lässt. Das von der ersten Tretkurbel eingeleitete Drehmoment lässt sich entweder unmittelbar an der Tretkurbelwelle oder in der mit der Tretkurbelwelle drehfest verbundenen ersten Teilhohlwelle erfassen.

Bei einer Ausgestaltung der Hohlwelle durch zwei drehfest miteinander verbundenen Teilhohlwellen ist vorzugsweise vorgesehen, dass die erste Teilhohlwelle, die zweite Teilhohlwelle und die Tretkurbelwelle mittels eines gemeinsamen Verbindungselementes drehfest verbunden sind. Auf diese Weise vereinfacht sich die Integration der Tretkurbelwelle in das Tretlager.

Vorzugsweise ist vorgesehen, dass die erste Magnetisierung im Bereich der ersten Teilhohlwelle angeordnet ist, und dass eine zweite Magnetisierung, die dem Material der Welle aufgeprägt ist, an einem von der ersten Teilhohlwelle axial beabstandeten Abschnitt der Welle angeordnet ist, welcher den mindestens einen Hohlraum umgibt. Die erste Magnetisierung ermöglicht die Erfassung des durch die Tretkurbelwelle im Bereich der ersten Teilhohlwelle eingeleiteten Drehmomentes. Die zusätzlich vorgesehene zweite Magnetisierung ermöglicht die Erfassung des auf die Welle insgesamt, von beiden Tretkurbeln, eingeleiteten resultierenden Drehmomentes. Auf diese Weise lässt sich das gesamte auf die Welle eingeleitete Drehmoment beider Tretkurbeln zusammen und unabhängig von dem von einer der beiden Tretkurbeln eingeleiteten Drehmoment erfassen. Der zweiten Magnetisierung kann dabei ein zweiter Sensor zugeordnet sein, der ebenfalls nach dem Prinzip des magnetostriktiven Effektes wirkt. Rechnerisch lässt sich danach das von der anderen der beiden Tretkurbeln eingeleitete Drehmoment ermitteln. Damit wird es möglich, die eingebrachten Drehmomente beider Tretkurbeln und damit die Leistung beider Beine des Bedieners unabhängig voneinander zu erfassen, was insbesondere im Hinblick auf eine Leistungsdiagnostik des Bedieners wünschenswert ist.

Vorzugsweise umfassen der erste Sensor und der zweite Sensor jeweils zwei Spulen als magnetische Erfassungsmittel, so dass die Störsicherheit der Sensoren verbessert wird.

Alternativ oder ergänzend hierzu kann vorgesehen sein, dass der ersten Magnetisierung und der zweiten Magnetisierung ein gemeinsamer Sensor, insbesondere eine gemeinsame Spule, zugeordnet ist. Die gemeinsame Spule beider Sensoren erfasst im Bereich der ersten Magnetisierung die Änderung des Magnetfeldes aufgrund eines ersten Drehmomentes und im Bereich der zweiten Magnetisierung aufgrund eines zweiten Drehmomentes. Durch Differenz- bzw. Summenbildung lässt sich auf das dritte Drehmoment schliessen.

Vorzugsweise ist vorgesehen, dass weiter ein Drehzahl-Aufnehmer vorgesehen ist, der die Drehzahl der Welle erfasst. Aus dem Produkt von Drehzahl und Drehmoment ergibt sich dann die Leistung des Bedieners. Der Drehzahl-Aufnehmer kann unabhängig von dem mindestens einen Sensor ausgebildet sein. Alternativ kann vorgesehen sein, dass einer der Sensoren zusätzlich zu dem Drehmoment auch die Drehzahl der Welle ermittelt; hierzu kann die mindestens eine Magnetisierung in Umfangsrichtung der Welle variieren, so dass die Stellung der Welle relativ zu dem Sensor erkannt werden kann. Weiter kann vorgesehen sein, dass sich die Magnetisierung in Umfangsrichtung zwar in der Richtung, aber nicht nach dem Betrag ändert, während ein in der Welle auftretendes Drehmoment den Betrag der Magnetisierung beeinflusst, aber die Richtung der Magnetisierung im Wesentlichen unbeeinflusst lässt. Auf diese Weise lassen sich Änderungen der Magnetisierung in einen Beitrag aufgrund eines in die Welle eingeleiteten Drehmomentes und einen Beitrag aufgrund einer Drehung der Welle auftrennen.

Weitere Vorteile und Merkmale der Erfindung ergeben sich aus den abhängigen Ansprüchen sowie aus der Beschreibung von bevorzugten Ausführungsbeispielen.

Die Erfindung wird im Folgenden unter Bezugnahme auf die anliegenden Zeichnungen anhand von Ausführungsbeispielen näher beschrieben und erläutert.

### Kurze Beschreibung der Zeichnungen

- Fig. 1: zeigt einen Querschnitt durch ein erstes Ausführungsbeispiel eines erfindungsgemässen Tretlagers,
- Fig. 2: zeigt einen Querschnitt durch ein zweites Ausführungsbeispiel eines erfindungsgemässen Tretlagers,

- Fig. 3: zeigt einen Querschnitt durch ein drittes Ausführungsbeispiel eines erfindungsgemässen Tretlagers,
- Fig. 4: zeigt einen Querschnitt durch ein viertes Ausführungsbeispiel eines erfindungsgemässen Tretlagers, und
- Fig. 5: zeigt einen Querschnitt durch ein fünftes Ausführungsbeispiel eines erfindungsgemässen Tretlagers.

### Detaillierte Beschreibung der Zeichnungen

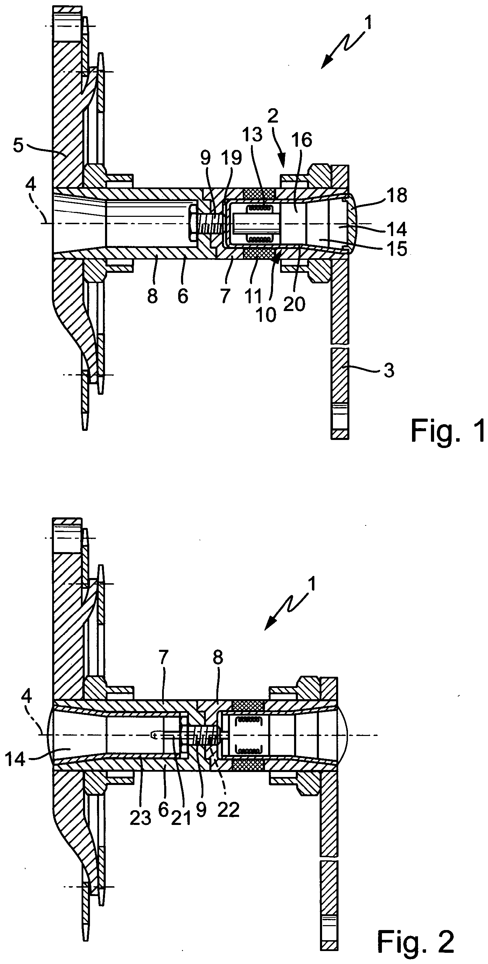

Fig. 1 zeigt ein Tretlager 1 mit einer Drehmomentsensorik 2, wobei das Tretlager 1 beispielsweise für ein Fahrrad, ein Ergometer oder ein Pedelec vorgesehen sein kann. Das Tretlager 1 umfasst eine erste Tretkurbel 3, an der ein Bediener ein Drehmoment um eine Achse 4 des Tretlagers 1 in dieses einleitet. Das Tretlager 1 umfasst weiter eine zweite Tretkurbel 5. Beide Tretkurbeln 3, 5 sind mit einer Welle 6 drehfest verbunden, die als Hohlwelle ausgebildet ist.

Die Welle 6 ist zweiteilig ausgebildet und umfasst eine erste Teilhohlwelle 7 und eine an der ersten Teilhohlwelle 7 drehfest befestigte zweite Teilhohlwelle 8. Die erste Teilhohlwelle 7 ist mit der ersten Tretkurbel 3 drehfest befestigt, so dass eine Drehung der ersten Tretkurbel 3 um die Achse 4 eine Drehung der ersten Teilhohlwelle 7 und der Welle 6 insgesamt um die Achse 4 bewirkt. Die beiden Teilhohlwellen 7, 8 sind als einseitig offene Hohlzylinder ausgebildet mit einer geschlossenen Stirnseite. Die erste Teilhohlwelle 7 und die zweite Teilhohlwelle 8 weisen jeweils an der einander zugekehrten Stirnseite eine komplementäre Strukturierung in Form einer Verzahnung auf, so dass eine Drehfestigkeit der Fügung der beiden Teilhohlwellen 7, 8 ermöglicht ist. Weiter sind die beiden Teilhohlwellen 7, 8 durch ein gemeinsames Verbindungsmittel 9, spezielle eine Schraube, aneinander befestigt und in axialer Richtung aneinander festgelegt.

Das Tretlager 1 umfasst weiter eine Drehmomenterfassungsvorrichtung 10 zur Erfassung des durch die beiden Tretkurbeln 3, 5 eingeleiteten Drehmomentes. Die Drehmomenterfassungsvorrichtung 10 umfasst eine erste Magnetisierung 11, die im Bereich der ersten Teilhohlwelle 7 in Richtung der axialen Erstreckung der ersten Teilhohlwelle 7 abschnittsweise das Korpus der ersten Teilhohlwelle 7 umlaufend angebracht ist. Die Drehmomenterfassungsvorrichtung 10 umfasst weiter einen der ersten Magnetisierung 11 zugeordneten ersten Sensor 12, der so ausgelegt und bezogen auf die erste Magnetisierung 11 so angeordnet ist, dass er eine Änderung des Magnetfeldes der ersten Magnetisierung 11 erfassen kann.

Der erste Sensor 12 umfasst ein magnetisches Erfassungmittel 13, das als Spule ausgebildet ist, eine Energieversorgungseinheit 14, eine Telemetrieeinheit 15 und eine Auswerteelektronik 16 mit einem Verstärker. Das magnetische Erfassungsmittel 13 erfasst das Magnetfeld der ersten Magnetisierung 11, zumindest aber eine Änderung der ersten Magnetisierung 11 und übermittelt das erfasste Signal über die Telemetrieeinheit 15 an die nachgeschaltete Auswerteelektronik 16 mit dem Verstärker. Die Energieversorgungseinheit 14 beaufschlagt das magnetische Erfassungsmittel 13 sowie die weiteren Komponenten des ersten Sensors 12. Das magnetische Erfassungsmittel 13, die Telemetrieeinheit 15, die Auswerteelektronik 16 und die Energieversorgungseinheit 14 sind zu einer baulichen Einheit 17 zusammengefasst, die nach Art einer Patrone ausgebildet ist und deren äussere Gestalt so ausgebildet ist, dass die bauliche Einheit 17 in der ersten Teilhohlwelle 7 im Wesentlichen formschlüssig aufgenommen ist.

Das magnetische Erfassungsmittel 13 ist in der baulichen Einheit 17 so angeordnet, dass in der montierten Stellung der baulichen Einheit 17 in der ersten Teilhohlwelle 7 die Spule in unmittelbarer Nähe zu der ersten Magnetisierung 11 angeordnet ist. Bei der Montage der baulichen Einheit 17 wird das magnetische Erfassungsmittel 13 damit lagerichtig zu der ersten Magnetisierung 11 positioniert. Die bauliche Einheit 17 umfasst weiter ein Deckelelement 18, das die bauliche Einheit 17 abschliesst. An einem von dem Deckelement 18 abgekehrten Ende der baulichen Einheit 17 ist ein Festlegungsabschnitt 19 vorgesehen, an dem die in die erste Teilhohlwelle 7 eingeführte bauliche Einheit 17 an der ersten Teilhohlwelle 7 und damit an der Welle 6 insgesamt festgelegt werden kann. Der Festlegungsabschnitt 19 umfasst ein Innengewinde, in das das Gewinde des als Schraube ausgebildeten gemeinsamen Verbindungsmittels 9 der beiden Teilhohlwellen 7, 8 abschnittweise eingeschraubt ist. An dem, dem Deckelelement 18 zugekehrten Ende weist die bauliche Einheit einen Einführabschnitt 20 auf, an dem sie sich V-förmig aufweitet, und an dem sich die Materialdicke der ersten Teilhohlwelle 7 entsprechend reduziert.

Ist die bauliche Einheit 17 wie in Fig. 1 dargestellt in die erste Teilhohlwelle 17 eingeführt und festgelegt, kann diese als erster Sensor 12 eine Änderung des Magnetfeldes der ersten Magnetisierung 11 erfassen. Eine derartige Änderung tritt aufgrund des magnetostriktiven Effektes in dem Material der ersten Teilhohlwelle 7 auf, wenn über eine der beiden Tretkurbeln 3, 5 ein Drehmoment in die Welle 6 eingeleitet wird.

In dem ersten Ausführungsbeispiel war die Welle 6 zweiteilig durch zwei aneinander befestigte Teilhohlwelle 7, 8 ausgebildet. Es versteht sich, dass zwischen den beiden Teilhohlwellen 7, 8 ein weiteres Zwischenstück, beispielsweise eine weitere Hohl- oder Vollwelle, angeordnet sein kann, und dass die bauliche Einheit 17 an diesem Zwischenstück ggf. zusätzlich festgelegt sein kann. Es versteht sich ferner, dass die Welle 6 auch über ihre gesamte axiale Erstreckung als durchgehende Hohlwelle ausgebildet sein kann. Die Festlegung der baulichen Einheit 17 kann durch eine Gewindeverbindung ausgebildet sein, wobei das Gewinde im Bereich des Einführabschnittes 20 angeordnet sein kann. Es versteht sich ebenfalls, dass die bauliche Einheit 17 auch anders als durch eine Schraubverbindung an der Welle 6 festgelegt sein kann, beispielsweise über eine Schnappverbindung oder eine Bajonettverbindung. Es versteht sich weiter, dass im Bereich der Welle 6 bzw. der die bauliche Einheit 17 aufnehmenden Teilhohlwelle 7 Führungsmittel, beispielsweise Führungsnuten, vorgesehen sein können, die ein Einfädeln der baulichen Einheit 17 erleichtern. Es ist ebenfalls nicht zwingend erforderlich, dass die bauliche Einheit 17 mit dem Deckelelement 18 bündig an der Fläche der Tretkurbel 3 abschliesst. Vielmehr kann vorgesehen sein, dass die bauliche Einheit 17 vollständig in der Welle 6, insbesondere innerhalb einer Teilhohlwelle 7, aufgenommen ist.

Für die Beschreibung der weiteren Ausführungsbeispiele werden gleiche oder vergleichbare Elemente mit den gleichen Bezugszeichen versehen. Ausgehend von der Beschreibung des in Fig. 1 dargestellten Ausführungsbeispiels sollen insbesondere Unterschiede und Abweichungen herausgestellt werden.

Fig. 2 zeigt ein Tretlager 1 mit einer Welle 6, die als Hohlwelle ausgebildet ist, und zwei mittels eines gemeinsamen Verbindungsmittels 9, speziell einer Schraube, aneinander gefügte Teilhohlwellen 7, 8 umfasst. Der Sensor 12 ist als bauliche Einheit 17 ausgebildet und umfasst ein magnetisches Erfassungsmittel 13, speziell eine Spule, eine Telemetrieeinheit 15 und eine Auswerteeinheit 16. Dem Sensor 12 ist eine Energieversorgungseinheit 14 zugeordnet, die allerdings nicht in der baulichen Einheit 17 angeordnet ist. Die Energieversorgungseinheit 14 ist in der zweiten Teilhohlwelle 8 angeordnet und mittels einer Steckverbindung 21 in elektrischen Kontakt. Die Steckverbindung 21 umfasst ein Kontaktelement 22, das die Schraube 9 entlang der Achse 4 durchsetzt und einen elektrisch leitenden Kontakt zwischen der Energieversorgungseinheit 14 und den weiteren Komponenten des Sensors 12 herstellt. Die Energieversorgungseinheit 14 ist in einer Aufnahme 23 angeordnet, die so gestaltet ist, dass die Aufnahme 23 im Wesentlichen formschlüssig in der zweiten Teilhohlwelle 8 aufgenommen ist. Bei der Montage wird die Aufnahme 23 mit der Energieversorgungseinheit 14 in die zweite Teilhohlwelle 8 eingeführt und an der zweiten Teilhohlwelle 8 beispielsweise durch Einschrauben festgelegt, dann wird die bauliche Einheit 17 mit den übrigen Kompontenten des Sensors 12 in die erste Teilhohlwelle 7 eingeführt und an der ersten Teihohlwelle 7 festgelegt. Bei dem Festlegen der baulichen Einheit 17 wird der elektrische Kontakt mit der Energieversorgungseinheit 14 hergestellt.

Es versteht sich, dass mehrere Kontaktelemente vorgesehen sein können, die nach Art eines Steckers die aneinander grenzenden Stirnflächen der beiden Teilhohlwellen 7, 8 durchsetzen.

Es versteht sich weiter, dass die räumliche Trennung der Energieversorgungseinheit 14 und der übrigen Komponenten des Sensors 12 auch für eine entlang der axialen Erstreckung durchgehende, einteilige Welle 6 vorgesehen sein kann; hierbei kann die Steckverbindung 21 so ausgestaltet sein, dass ein definierter Abstand zwischen der Aufnahme 23 der Energieversorgungseinheit 14 und den übrigen Komponenten der baulichen Einheit 17 eingehalten wird, um das magnetische Erfassungsmittel 13 lagerichtig in Bezug auf die erste Magnetisierung 11 zu positionieren.

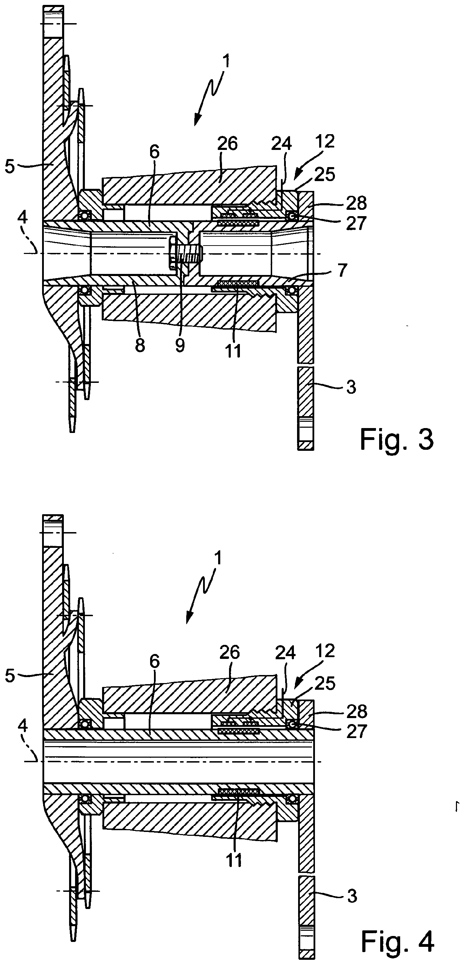

Fig. 3 zeigt ein Tretlager 1 mit einer ersten Tretkurbel 3 und einer zweiten Tretkurbel 5, wobei die beiden Tretkurbeln 3, 5 mit einer als Hohlwelle ausgebildeten Welle 6 drehfest verbunden sind. Die Welle 6 ist zweiteilig ausgebildet und umfasst eine erste, mit der ersten Tretkurbel 3 drehfest gekoppelte Teilhohlwelle 7 und eine zweite, mit der zweiten Tretkurbel 5 drehfest gekoppelte Teilhohlwelle 8, wobei die beiden Teilhohlwellen 7, 8 durch ein Verbindungsmittel 9, vorliegend eine Schraube, in axialer Richtung aneinander festgelegt werden. An den einander zugekehrten Stirnflächen weisen die beiden Teilhohlwellen 7, 8 eine zueinander komplementäre Profilierung auf, die eine verdrehsichere Festlegung der beiden Teilhohlwellen 7, 8 aneinander sicherstellt.

Im Bereich der ersten Teilhohlwelle 7 ist im Bereich des Aussenumfangs abschnittsweise eine umlaufende erste Magnetisierung 11 vorgesehen. Der ersten Magnetisierung 11 ist ein Sensor 12 zugeordnet, der ausserhalb der ersten Teilhohlwelle 7 angeordnet ist. Der Sensor 12 umfasst ein als Spule ausgebildetes magnetisches Erfassungsmittel 13, das mittels eines Kabels 24 von einer ausserhalb des Sensors 12 angeordneten Energieversorgungseinheit bzw. Anzeigeeinheit beaufschlagt wird. Der Sensor 12 ist in einer einschraubbaren Einheit 25 aufgenommen, die mittels eines einer Lageraufnahme 26 zugekehrten Aussengewindes in ein an der Lageraufnahme 26 vorgesehenes Innengewinde einschraubbar ist. Die einschraubbare Einheit 25 ist über ein Wälzlager 27 an den Aussenumfang der ersten Teilhohlwelle 7 sowie gegenüber einen nur abschnittsweise dargestellten Kettenblatthalter 28 abgestützt. Die einschraubbare Einheit 25 ist im Wesentlichen konzentrisch zu der Achse 4 des Tretlagers 1 ausgerichtet und umgibt die erste Teilhohlwelle 7 mindestens abschnittsweise.

Es versteht sich, dass alternativ eine einschraubbare Einheit 25 vorgesehen sein kann, die nur an einer Seite der Teilhohlwelle 7 bzw. der Welle 6 vorgesehen ist, und die mit ihrem Aussengewinde in die Lageraufnahme 26 bzw. einen Abschnitt der Welle 6 einschraubbar ist. Eine derartige einschraubbare Einheit ist nach Art einer einfachen Schraube ausgestaltet, in der der Sensor 12 baulich integriert ist.

Fig. 4 zeigt eine einschraubbare Einheit 25 mit einem Kabel 24 und einer Lageraufnahme 26 für den Fall einer als Hohlwelle ausgestalteten Welle 6, die einteilig und entlang ihrer axialen Erstreckung durchgehend ausgebildet ist. Dabei ist die Tretkurbel 3 an der dem Kettenblatthalter 28 abgewandten Seite abnehmbar, um die Montierbarkeit des Systems sicherzustellen.

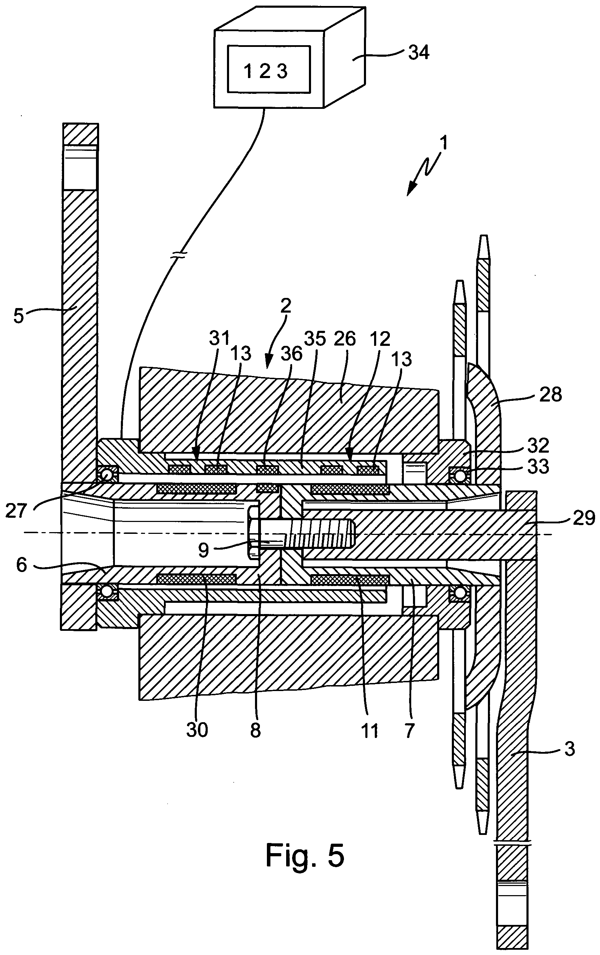

Fig. 5 zeigt ein Tretlager 1 mit einer ersten Tretkurbel 3 und einer zweiten Tretkurbel 5, die jeweils drehfest mit einer als Hohlwelle ausgebildeten Welle 6 verbunden sind. Die Welle 6 ist zweiteilig ausgebildet und umfasst eine erste Teilhohlwelle 7 und eine zweite Teilhohlwelle 8. Die zweite Teilhohlwelle 8 ist unmittelbar mit der zweiten Tretkurbel 5 drehfest verbunden.

Die erste Tretkurbel 3 ist unmittelbar mit einer Tretkurbelwelle 29 drehfest verbunden, wobei die Tretkurbelwelle 29 in der ersten Teilhohlwelle 7 aufgenommen ist und zu den innenseitigen Wandflächen der hohlzylindrisch ausgebildeten ersten Teilhohlwelle 7 einen Abstand einhält. Die erste Teilhohlwelle 7, die zweite Teilhohlwelle 8 und die Tretkurbelwelle 29 sind untereinander mittels eines gemeinsamen Verbindungsmittels 9, in dem dargestellten Ausführungsbeispiel mittels einer Schraube, aneinander verdrehsicher zur Übertragung des Drehmomentes befestigt. Insbesondere ist die erste Tretkurbel 3 unter Zwischenschaltung der Tretkurbelwelle 29 an der ersten Teilhohlwelle 7 und damit an der Welle 6 indirekt drehfest angeordnet. An der ersten Teilhohlwelle 7 ist endseitig nach Art eines im wesentlichen senkrecht abgestellten Abschnittes ein Kettenblatthalter 28 angeordnet, wobei die Teilhohlwelle 7 an einem Endabschnitt 35 der einschraubbaren Einheit 25 gelagert ist und den Kettenblatthalter 28 abstützt. Der Kettenblatthalter 28 stützt Kettenblätter, an denen die Kette, die der Bediener über die beiden Tretkurbeln 3, 5 antreibt, gelagert und geführt werden kann.

Das Tretlager 1 umfasst weiter eine Drehmomentsensorik mit einer Drehmomenterfassungsvorrichtung 2, die eine erste Magnetisierung 11 mit einem ersten Sensor 12 umfasst. Die erste Magnetisierung 11 ist im Bereich der ersten Teilhohlwelle 7 an der äusseren Umfangsfläche abschnittsweise vorgesehen. Der erste Sensor 12 umfasst zwei magnetische Erfassungsmittel 13, die als zwei axial beabstandete Spulen ausgebildetsind. Die Drehmomenterfassungsvorrichtung umfasst weiter eine zweite Magnetisierung 30, die als magnetisierter Abschnitt in einem axialen Abstand zu der ersten Magnetisierung 11 im Bereich des Aussenumfangs der zweiten Teilhohlwelle 8 angeordnet ist. Der zweiten Magnetisierung 30 ist ein zweiter Sensor 31 zugeordnet, der zwei magnetische Erfassungsmittel 13, die ebenfalls als Spulen ausgebildet sind, umfasst, wobei die beiden Spulen des zweiten Sensors 31 einen axialen Abstand aufweisen. Die je zwei Spulen der beiden Sensoren 12, 31 sind insgesamt auf einer einschraubbaren Einheit 25 aufgenommen, die über ein Gewinde an der Lageraufnahme 26 einschraubbar ist. Die Anordnung der Spulen in der einschraubbaren Einheit 25 ist so getroffen, dass in der eingeschraubten Stellung der einschraubbaren Einheit die Spulen der beiden Sensoren 12, 31 jeweils lagerichtig zu den zugeordneten Magnetisierungen 11, 30 angeordnet ist. Die einschraubbare Einheit 25 stützt sich mittels eines Wälzlagers 27 an der Welle 6 ab. Die einschraubbare Einheit 25 erfüllt damit zwei Funktionen, nämlich den Sensor 12 bzw. beide Sensoren 12, 31 aufzunehmen sowie eine Lagerung und Aufnahme der Welle 6 darzustellen.

Die Welle 6 wird im Bereich der Teilhohlwelle 7 durch eine weitere Stützeinheit 32 gegen die Lageraufnahme 26 abgestützt, wobei die Stützeinheit 32 in die Lageraufnahme 26 abschnittsweise eingeschraubt ist und sich gegen die Welle mittels eines weiteren Wälzlagers 33 abstützt.

Fig. 5 zeigt weiter eine Anzeigeeinheit 34, die die von den Sensoren 12, 31 erfassten, bereits innerhalb der einschraubbaren Einheit 26 ausgewerteten Drehmomente bzw. Leistungen dem Bediener des Tretlagers 1 sichtbar macht.

Bei Betrieb des Tretlagers 1 erfasst der erste Sensor 12 die im Bereich der ersten Magnetisierung 11 auftretenden Spannungen in dem Material der ersten Teilhohlwelle 7 und der zweite Sensor 31 die im Bereich der zweiten Magnetisierung 30 auftretenden Spannungen in dem Material der Welle 6. Aufgrund der zwischen der ersten Tretkurbel 3 und der ersten Teilhohlwelle 7 zwischengeschalteten Tretkurbelwelle 29 erfasst der zweite Sensor 31 im Wesentlichen die bei der Betätigung der ersten Tretkurbel 3 eingebrachten Drehmomente, speziell also das Drehmoment aufgrund der Betätigung durch das eine Bein des Bedieners, das die erste Tretkurbel 3 antreibt. Der zweite Sensor 31 erfasst im Wesentlichen die insgesamt in der Welle 6 auftretenden Drehmomente, also die Überlagerung der von beiden Tretkurbeln 3, 5 eingebrachten Drehmomente. Durch Differenzbildung der von beiden Sensoren 12, 31 erfassten Drehmomente lässt sich das von der zweiten Tretkurbel 5 eingebrachte Drehmoment rechnerisch ermitteln und in der Anzeigeeinheit 34 dem Bediener angeben.

Das Tretlager 1 umfasst weiter einen Drehzahlaufnehmer 36, der in der einschraubbaren Einheit 25 angeordnet ist und von den je zwei Spulen 13 der beiden Sensoren 12, 31 beabstandet angeordnet ist. Der Drehzahlaufnehmer 36 erfasst die aufgrund des insgesamt eingebrachten Drehmomentes von der Welle 6 ausgeführte Drehzahl, also die Winkelgeschwindigkeit und damit die Zahl der Umdrehungen der Welle 6 pro Zeiteinheit. Der Drehzahlaufnehmer 36 kann durch eine geeignete optische oder magnetische Markierung und eine geeignete optische oder magnetische Erfassung gebildet sein und ermitteln, wie viele Markierungen in der Zeiteinheit erfasst werden. Es versteht sich, dass eine der Magnetisierungen 11, 30 derart ausgebildet werden kann, dass eine Markierung vorgesehen ist, die durch die Sensoren 12, 31 erfassbar ist, so dass der Drehzahlaufnehmer in die Drehmomenterfassungsvorrichtung 2 integriert sein kann. Es versteht sich ferner, dass der Drehzahlaufnehmer auch ausserhalb des Tretlagers 1 vorgesehen sein kann und beispielsweise die Geschwindigkeit der Kette erfassen kann, die durch das Tretlager 1 angetrieben wird. Alternativ oder ergänzend hierzu kann der Drehzahlaufnehmer eine Lichtschranke umfassen, die ermittelt, wie oft pro Zeiteinheit eine der beiden Tretkurbeln 3, 5 eine Umdrehung durchführt.

Ist durch die Drehmomenterfassungsvorrichtung 2 das Drehmoment und durch den Drehzahlaufnehmer 36 die Drehzahl des Tretlagers 1 bekannt, lässt sich die durch den Bediener des Tretlagers 1 erbrachte Leistung durch Multiplikation berechnen. Das gilt sowohl für die insgesamt erbrachte Leistung als auch die von jedem Bein des Bedieners an jedem der beiden Tretkurbeln 3, 5 erbrachte Leistung, die voneinander unabhängig erfasst und ermittelt werden kann.

Bei dem vorstehend beschriebenen Ausführungsbeispiel umfasste jeder der beiden Sensoren 12, 31 je zwei voneinander beabstandete Spulen als magnetische Erfassungsmittel 13 für die beiden Magnetisierungen 11, 30. Es versteht sich, dass beide Sensoren 12, 31 ein gemeinsames magnetisches Erfassungsmittel aufweisen können, beispielsweise eine einzige, beiden Sensoren 12, 31 gemeinsame Spule, die sich entlang der axialen Ausdehnung der einschraubbaren Einheit 25 erstreckt. Die gemeinsame Spule erfasst in einem ersten Abschnitt im Bereich der ersten Magnetisierung 11 eine erste Spannung und in einem zweiten Abschnitt im Bereich der zweiten Magnetisierung 30 eine zweite Spannung. Über die gesamte Erstreckung der gemeinsamen Spule resultiert eine dritte Spannung, die sich als vorzeichenrichtige Summe der ersten und der zweiten Spannung ergibt. Die der Änderung der ersten Magnetisierung 11 entsprechende erste Spannung kann an der Spule abgegriffen werden; ebenso die zweite Spannung sowie die resultierende Gesamtspannung. Auf diese Weise lassen sich zwei oder mehrere der Drehmomente durch ein einziges magnetisches Erfassungsmittel, insbesondere eine einzige Spule, simultan erfassen und jeweils einzeln auslesen.

Es versteht sich ebenfalls, dass das über die erste Tretkurbel 3 eingebrachte Drehmoment auch durch eine an der Tretkurbelwelle 29 oder eine an der Innenseite der erste Teilhohlwelle 7 angeordnete erste Magnetisierung 11 erfasst werden kann.

Bei dem vorstehend beschriebenen fünften Ausführungsbeispiel war die Tretkurbelwelle 29 als Vollwelle ausgebildet. Es versteht sich, dass die Tretkurbelwelle 29 auch als Hohlwelle ausgebildet sein kann.

Bei der für das dritte, vierte und fünfte Ausführungsbeispiel beschriebenen einschraubbaren Einheit 25 versteht es sich, dass die gesamte oder ein Teil der Auswerteelektronik in die einschraubbare Einheit 25 baulich integriert sein kann (z.B. als Flexboard).

Es versteht sich, dass die fünf vorbeschriebenen Ausführungsbeispiele, einschliesslich der angedeuteten Abwandlungen, untereinander kombiniert werden können.

Beispielsweise kann ausgehend von dem fünften Ausführungsbeispiel (Fig. 5) die Erfassung der Änderung der zweiten Magnetisierung 30 durch eine im Bereich der zweiten Teilhohlwelle 8 angeordnete bauliche Einheit 17 ausgeführt werden, wie sie in Bezug auf die ersten beiden Ausführungsbeispiele (Fig. 1 und 2) beschrieben wurde.

Insofern vorstehend die magnetischen Erfassungsmittel 13 als Spulen ausgebildet wurden, versteht es sich, dass auch andere Mittel in Frage kommen, die grundsätzlich geeignet sind, die Änderung eines Magnetfeldes zu erfassen, wie beispielsweise Hall-Sensoren oder Reed-Sensoren.

Insofern vorstehend auf die Ausbildung der Welle 6 als Hohlwelle Bezug genommen wurde, versteht es sich, dass es ausreichend sein kann, dass die Welle 6 nur abschnittsweise als Hohlwelle ausgebildet ist, beispielsweise im Bereich der drehfesten Verbindung mit einer der Tretkurbeln 3, 5, und im Übrigen als Vollwelle ausgebildet ist. Es versteht sich ferner, dass die beiden Teilhohlwellen 7, 8 nicht entlang ihrer Stirnflächen im wesentlichen flächig aneinander stossen müssen; es kann vielmehr ausreichend sein, wenn diese als beidseitig offene Hohlzylinder ausgebildet sind und nur entlang der kreisringförmigen Stirnfläche eine im wesentlichen linienhafte Verbindung aufweisen. Es versteht sich ferner, dass eine der beiden Teilhohlwellen 7, 8 auch abschnittsweise in der anderen der beiden Teilhohlwellen aufgenommen sein kann. Auch kann vorgesehen sein, dass die beiden Teilhohlwellen als beidseitig offene Hohlzylinder ausgebildet sind und ein Zwischenelement abschnittsweise in jeder der beiden Teilhohlwellen aufgenommen ist, wobei das Zwischenelement zur Verbindung der beiden Teilhohlwellen miteinander vorgesehen ist. Im Bereich des Zwischenelementes wäre dann die Welle als Vollwelle anzusehen, da das Zwischenelement den Hohlraum der jeweiligen Abschnitte der Teilhohlwellen ausfüllt.

Bei den vorstehend beschriebenen Ausführungsbeispielen war die axiale Verbindung der beiden Teilhohlwellen 7, 8 durch ein gemeinsames, als Schraube ausgebildetes Verbindungsmittel 9 beschrieben worden. Es versteht sich, dass die Teilhohlwellen 7, 8 auch ohne ein weiteres Verbindungsmittel aneinander gefügt werden können, beispielsweise durch eine Ausbildung als Rast-, Schnapp- oder Bajonettverschluss, durch eine Klebung, durch Einpressen, oder als Pressverbund mit einem Presssitz gefügt sind, beispielsweise nachdem eines der Bauteile zuvor angewärmt wurde.

Die Erfindung wurde für ein Tretlager 1 eines Fahrrades beschrieben. Es versteht sich, dass das Tretlager 1 ebenfalls das Tretlager eines Liegerades, eines Kettcars oder allgemeiner eines Kettenfahrzeugs sein kann, das mittels einer angetriebenen Kette antreibbar ist.

### Bezugszeichenliste

- 1: Tretlager
- 2: Drehmomentsensorik
- 3: erste Tretkurbel
- 4: Achse
- 5: zweite Tretkurbel
- 6: Welle
- 7: erste Teilhohlwelle
- 8: zweite Teilhohlwelle
- 9: Verbindungsmittel
- 10: Drehmomenterfassungsvorrichtung
- 11: erste Magnetisierung
- 12: erster Sensor
- 13: magnetisches Erfassungsmittel
- 14: Energieversorgungseinheit
- 15: Telemetrieeinheit
- 16: Auswerteeinheit
- 17: bauliche Einheit
- 18: Deckelelement
- 19: Festlegungsabschnitt
- 20: Einführabschnitt
- 21: Steckverbindung
- 22: Kontaktelement
- 23: Aufnahme
- 24: Kabel
- 25: einschraubbare Einheit
- 26: Lageraufnahme
- 27: Wälzlager
- 28: Kettenblatthalter
- 29: Tretkurbelwelle
- 30: zweite Magnetisierung
- 31: zweiter Sensor
- 32: Stützeinheit
- 33: weiteres Wälzlager
- 34: Anzeigeeinheit
- 35: Endabschnitt von einschraubbare Einheit
- 36: Drehzahlaufnehmer

## Patentansprüche

1. Tretlager mit einer Drehmomentsensorik (2), umfassend mindestens eine Tretkurbel (3, 5),
eine Welle (6) aus einem Material, die mit der mindestens einen Tretkurbel (3, 5) drehfest verbunden ist, und
eine Drehmomenterfassungsvorrichtung zur Erfassung eines Drehmomentes im Bereich der Welle (6), wobei die Drehmomenterfassungsvorrichtung eine erste Magnetisierung (11), die dem Material der Welle (6) aufgeprägt ist, und einen Sensor (12) umfasst, der eine Änderung der ersten Magnetisierung (11) aufgrund des in die Welle (6) eingeleiteten Drehmomentes erfasst,
**dadurch gekennzeichnet,**
**dass** die Welle (6) als Hohlwelle mit mindestens einem Hohlraum ausgebildet ist, und
**dass** die erste Magnetisierung (11) mindestens an einem Abschnitt der Welle (6) angeordnet ist, welcher den mindestens einen Hohlraum umgibt.

2. Tretlager nach Anspruch 1, **dadurch gekennzeichnet, dass** der mindestens eine Hohlraum der Hohlwelle einen Aufnahmeraum für den Sensor (12) der Drehmomenterfassungsvorrichtung bildet.

3. Tretlager nach Anspruch 1 oder Anspruch 2, **dadurch gekennzeichnet, dass** die Hohlwelle (6) zweiteilig ausgebildet ist und eine erste Teilhohlwelle (7) und eine zweite Teilhohlwelle (8) umfasst, die drehfest miteinander verbunden sind.

4. Tretlager nach einem der Ansprüche 1 bis 3, **dadurch gekennzeichnet, dass** der Sensor (12) ein magnetisches Erfassungmittel (13), insbesondere eine Spule, eine Telemetrieeinheit (15) und eine Auswerteeinheit (16) mit einer Auswerteelektronik umfasst, die als bauliche Einheit (17) zusammengefasst sind.

5. Tretlager nach Anspruch 4, **dadurch gekennzeichnet, dass** der Sensor (12) eine Energieversorgungseinheit (14) umfasst, und dass die Energieversorgungseinheit (14) in die bauliche Einheit (17) integriert ist.

6. Tretlager nach Anspruch 3 und Anspruch 4, **dadurch gekennzeichnet, dass** die bauliche Einheit (17) in der ersten Teilhohlwelle (7) und eine Energieversorgungseinheit (14) des Sensors (12) in der zweiten Teilhohlwelle (8) angeordnet sind.

7. Tretlager nach Anspruch 1 oder 3, **dadurch gekennzeichnet, dass** der Sensor (12) in einer aussen an der Welle (6) einschraubbaren Einheit (25) angeordnet ist.

8. Tretlager nach einem der Ansprüche 1 bis 7, **dadurch gekennzeichnet, dass** die mindestens eine Tretkurbel (3) mit einer Tretkurbelwelle (29) drehfest verbunden ist, und dass die Tretkurbelwelle (29) in der Welle (6), insbesondere in der ersten Teilhohlwelle (7), drehfest aufgenommen ist.

9. Tretlager nach einem der Ansprüche 3 bis 8, **dadurch gekennzeichnet, dass** die erste Teilhohlwelle (7), die zweite Teilhohlwelle (8) und die Tretkurbelwelle (29) mittels eines gemeinsamen Verbindungselementes (9) drehfest verbunden sind.

10. Tretlager nach Anspruch 8 oder 9, **dadurch gekennzeichnet, dass** die erste Magnetisierung (11) im Bereich der ersten Teilhohlwelle (7) angeordnet ist, und dass eine zweite Magnetisierung (30), die dem Material der Welle (6) aufgeprägt ist, an einem von der ersten Teilhohlwelle (7) axial beabstandeten Abschnitt der Welle (6) angeordnet ist, welcher den mindestens einen Hohlraum umgibt.

11. Tretlager nach Anspruch 10, **dadurch gekennzeichnet, dass** der zweiten Magnetisierung (30) ein zweiter Sensor (31) zugeordnet ist.

12. Tretlager nach Anspruch 100 oder 11, **dadurch gekennzeichnet, dass** der erste Sensor (12) und der zweite Sensor (31) jeweils zwei Spulen als magnetische Erfassungsmittel (13) umfassen.

13. Tretlager nach Anspruch 10 oder 11, **dadurch gekennzeichnet, dass** der ersten Magnetisierung (11) und der zweiten Magnetisierung (30) ein gemeinsamer Sensor, insbesondere eine gemeinsame Spule, zugeordnet ist.

14. Tretlager nach einem der Ansprüche 1 bis 13, **dadurch gekennzeichnet, dass** weiter ein Drehzahl-Aufnehmer (36) vorgesehen ist, der die Drehzahl der Welle (6) erfasst.

15. Fahrrad, Ergometer oder Pedelec, umfassend ein Tretlager nach einem der Ansprüche 1 bis 14.

## Claims

1. Bottom bracket bearing with a torque sensor unit (2), comprising
at least one pedal crank (3, 5),
a shaft (6) consisting of one material, which shaft is connected to the at least one pedal crank (3, 5) in a rotationally fixed manner, and
a torque detection apparatus for detecting a torque in the region of the shaft (6), with the torque detection apparatus comprising a first magnetization element (11) which is embossed on the material of the shaft (6) and a sensor (12) which detects a change in the first magnetization element (11) on the basis of the torque introduced into the shaft (6),
**characterized**
**in that** the shaft (6) is in the form of a hollow shaft having at least one cavity, and
**in that** the first magnetization element (11) is arranged at least on a portion of the shaft (6), which portion surrounds the at least one cavity.

2. Bottom bracket bearing according to Claim 1, **characterized in that** the at least one cavity of the hollow shaft forms a receiving space for the sensor (12) of the torque detection apparatus.

3. Bottom bracket bearing according to Claim 1 or Claim 2, **characterized in that** the hollow shaft (6) is of two-part design and comprises a first hollow component shaft (7) and a second hollow component shaft (8), these hollow component shafts being connected to one another in a rotationally fixed manner.

4. Bottom bracket bearing according to one of Claims 1 to 3, **characterized in that** the sensor (12) comprises a magnetic detection means (13), in particular a coil, a telemetry unit (15) and an evaluation unit (16) with an evaluation electronics unit, these being combined to form one physical unit (17).

5. Bottom bracket bearing according to Claim 4, **characterized in that** the sensor (12) comprises a power supply unit (14), and **in that** the power supply unit (14) is integrated in the physical unit (17).

6. Bottom bracket bearing according to Claim 3 and Claim 4, **characterized in that** the physical unit (17) is arranged in the first hollow component shaft (7), and a power supply unit (14) of the sensor (12) is arranged in the second hollow component shaft (8).

7. Bottom bracket bearing according to Claim 1 or 3, **characterized in that** the sensor (12) is arranged in a unit (25) which can be screwed to the outside of the shaft (6).

8. Bottom bracket bearing according to one of Claims 1 to 7, **characterized in that** the at least one pedal crank (3) is connected to a pedal crank shaft (29) in a rotationally fixed manner, and **in that** the pedal crank shaft (29) is accommodated in the shaft (6), in particular in the first hollow component shaft (7), in a rotationally fixed manner.

9. Bottom bracket bearing according to one of Claims 3 to 8, **characterized in that** the first hollow component shaft (7), the second hollow component shaft (8) and the pedal crank shaft (29) are connected in a rotationally fixed manner by means of a common connecting element (9).

10. Bottom bracket bearing according to Claim 8 or 9, **characterized in that** the first magnetization element (11) is arranged in the region of the first hollow component shaft (7), and **in that** a second magnetization element (30) which is embossed on the material of the shaft (6) is arranged on a portion of the shaft (6) which is at an axial distance from the first hollow component shaft (7), which portion surrounds the at least on cavity.

11. Bottom bracket bearing according to Claim 10, **characterized in that** the second magnetization element (30) has a second associated sensor (31).

12. Bottom bracket bearing according to Claim 100 or 11, **characterized in that** the first sensor (12) and the second sensor (31) each comprise two coils as the magnetic detection means (13).

13. Bottom bracket bearing according to Claim 10 or 11, **characterized in that** the first magnetization element (11) and the second magnetization element (30) have a common associated sensor, in particular a common coil.

14. Bottom bracket bearing according to one of Claims 10 to 13, **characterized in that** a rotation speed sensor (36) is also provided, said rotation speed sensor detecting the rotation speed of the shaft (6).

15. Bicycle, ergometer or Pedelec, comprising a bottom bracket bearing according to one of Claims 1 to 14.

## Revendications

1. Pédalier présentant un système de capteur de couple (2), comprenant
au moins une manivelle de pédalier (3, 5),
un arbre (6) constitué d'un matériau relié solidaire en rotation à ladite au moins une manivelle de pédalier (3, 5), et
un dispositif de détection de couple pour la détection d'un couple dans la zone de l'arbre (6), dans lequel le dispositif de détection de couple comprend une première magnétisation (11) imprégnant le matériau de l'arbre (6) et un capteur (12) qui détecte une variation de la magnétisation (11) provoquée par le couple introduit dans l'arbre (6),
**caractérisé**
**en ce que** l'arbre (6) est réalisé sous la forme d'un arbre creux comportant au moins un cavité, et
**en ce que** la première magnétisation (11) est disposée au moins dans une partie de l'arbre (6) qui entoure ladite au moins une cavité.

2. Pédalier selon la revendication 1, **caractérisé en ce que** ladite au moins une cavité de l'arbre creux forme un espace de logement pour le capteur (12) du dispositif de détection de couple.

3. Pédalier selon la revendication 1 ou la revendication 2, **caractérisé en ce que** l'arbre creux (6) est réalisé en deux parties et comprend un premier arbre creux partiel (7) et un second arbre creux partiel (8) qui sont reliés l'un à l'autre solidaires en rotation.

4. Pédalier selon l'une des revendications 1 à 3, **caractérisé en ce que** le capteur (12) comprend un moyen de détection magnétique (13), en particulier une bobine, une unité de télémétrie (15) et une unité d'évaluation (16) comportant une électronique d'évaluation, qui sont combinés sous la forme d'une unité structurelle (17).

5. Pédalier selon la revendication 4, **caractérisé en ce que** le capteur (12) comprend une unité d'alimentation en énergie (14) et **en ce que** l'unité d'alimentation en énergie (14) est intégrée à l'unité structurelle (17).

6. Pédalier selon la revendication 3 et la revendication 4, **caractérisé en ce que** l'unité structurelle (17) est disposée dans le premier arbre creux partiel (7) et **en ce qu'**une unité d'alimentation en énergie (14) du capteur (12) est disposée dans le second arbre creux partiel (8).

7. Pédalier selon la revendication 1 ou 3, **caractérisé en ce que** le capteur (12) est disposé dans une unité extérieure (25) qui peut être vissée à l'arbre (6) .

8. Pédalier selon l'une des revendications 1 à 7, **caractérisé en ce que** ladite au moins une manivelle de pédalier (3) est reliée solidaire en rotation à un arbre de manivelle de pédalier (29), et **en ce que** l'arbre de manivelle de pédalier (29) est reçu solidaire en rotation dans l'arbre (6), en particulier dans le premier arbre creux partiel (7).

9. Pédalier selon l'une quelconque des revendications 3 à 8, **caractérisé en ce que** le premier arbre creux partiel (7), le second arbre creux partiel (8) et l'arbre de manivelle de pédalier (29) sont reliés solidaires en rotation au moyen d'un élément de liaison commun (9).

10. Pédalier selon la revendication 8 ou 9, **caractérisé en ce que** la première magnétisation (11) est disposée dans la zone du premier arbre creux partiel (7), et **en ce qu'**une seconde magnétisation (30) imprégnant le matériau de l'arbre (6) est disposée sur une partie de l'arbre (6) axialement espacée du premier arbre creux partiel (7), qui entoure ladite au moins une cavité.

11. Pédalier selon la revendication 10, **caractérisé en ce qu'**un second capteur (31) est associé à la seconde magnétisation (30).

12. Pédalier selon la revendication 100 ou 11, **caractérisé en ce que** le premier capteur (12) et le second capteur (31) comprennent chacun deux bobines en tant que moyens de détection magnétiques (13).

13. Pédalier selon la revendication 10 ou 11, **caractérisé en ce qu'**un capteur commun, en particulier une bobine commune, est associé à la première magnétisation (11) et à la seconde magnétisation (30).

14. Pédalier selon l'une quelconque des revendications 1 à 13, **caractérisé en ce qu'**il est en outre prévu un capteur de vitesse de rotation (36) qui détecte la vitesse de rotation de l'arbre (6).

15. Bicyclette, ergomètre ou vélo électrique comprenant un pédalier selon l'une quelconque des revendications 1 à 14.
